(19) Europäisches Patentamt
European Patent Office
Office européen des brevets

(11) Veröffentlichungsnummer: **0 394 779 B1**

# (12) EUROPÄISCHE PATENTSCHRIFT

(45) Veröffentlichungstag der Patentschrift: **22.06.94**

(51) Int. Cl.[5]: **C07C 69/75**, C07C 69/753, C07C 69/60, C07C 67/08, C08F 2/26, C08L 9/08

(21) Anmeldenummer: **90107117.5**

(22) Anmeldetag: **12.04.90**

## (54) Emulgatoren und Verfahren zur Herstellung grobteiliger homodisperser Polymerdispersionen unter Verwendung dieser Emulgatoren.

(30) Priorität: **25.04.89 DE 3913509**

(43) Veröffentlichungstag der Anmeldung:
**31.10.90 Patentblatt 90/44**

(45) Bekanntmachung des Hinweises auf die Patenterteilung:
**22.06.94 Patentblatt 94/25**

(84) Benannte Vertragsstaaten:
**DE ES FR GB IT**

(56) Entgegenhaltungen:
**DE-A- 2 950 703**
**GB-A- 1 444 696**
**US-A- 4 450 260**

**PATENT ABSTRACTS OF JAPAN, unexamined applications, C Sektion, Band 12, Nr.279, 1. August 1988; THE PATENT OFFICE JAPANESE GOVERNMENT, Seite 26 C 517**

(73) Patentinhaber: **BAYER AG**

**D-51368 Leverkusen(DE)**

(72) Erfinder: **Schmidt, Adolf, Dr.**
**Roggendorfstrasse 67**
**D-5000 Köln 80(DE)**
Erfinder: **Eichenauer, Herbert, Dr.**
**Gustav-Heinemann-Strasse 3**
**D-4047 Dormagen 1(DE)**
Erfinder: **Ott, Karl-Heinz, Dr.**
**Paul-Klee-Strasse 54**
**D-5090 Leverkusen 1(DE)**
Erfinder: **Pischtschan, Alfred, Dr.**
**Zur Eiche 33**
**D-5067 Kürten(DE)**

**EP 0 394 779 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Emulgatoren und die Herstellung von grobteiligen, homodispersen Kunststoffdispersionen mit Hilfe dieser speziellen, in ihrer Wirkungsweise überraschenden Dispergierhilfsmitteln (Emulgatoren).

Unter "homodispersen" Dispersionen (Latices) werden solche mit einer engen Verteilung der Durchmesser der Latexteilchen verstanden. Eine Definition der mittleren Latexteilchendurchmesser gibt DIN 53 206, Blatt 1 an. Danach ist der mittlere Volumendurchmesser der Teilchen DAV und der mittlere Anzahldurchmesser der Teilchen DAN wie folgt festgelegt:

$$DAV = \frac{n_i \cdot D_i^4}{n_i \cdot D_i^3}$$

$$DAN = \frac{n_i \cdot D_i}{n_i}$$

Als Maß für die Uniformität kann man den Quotienten DAV/DAN ansehen.

Grobteilig im Sinne der Erfindung sind Dispersionen (Latices), deren mittlerer Teilchendurchmesser DAN 150 bis 600 nm, vorzugsweise 250 bis 450 nm ist. "Homodispers" im Sinne der Erfindung sind Latices in denen DAV/DAN Quotient <1,15 ist.

Grobteilige Polybutadienlatices werden bekanntlich zur Herstellung von schlagfesten thermoplastischen Formmassen (z.B. schlagfestes Polystyrol, ABS-Polymerisate) benötigt. Grundsätzlich können grobteilige Kautschuk-Latices mit üblichen Emulgatoren nach der Saatlatexmethode hergestellt werden (vgl. Houben-Weyl, Methoden der Organischen Chemie, Makromolekulare Stoffe Teil 1, 1961, Thieme Verlag Stuttgart, Seite 339).

Für die Herstellung von Polybutadienlatices, Butadien-Styrol-Copolymerisat-Latices, Polychloroprenlatices haben sich Emulgatoren auf Basis der natürlich vorkommenden Harzsäuren ("Harzseifen") gut bewährt. Solche Harzseifen begünstigen aber die Bildung neuer Latexteilchen, so daß bei ihrer Anwendung unerwünscht feinteilige, ggf. sogar bi- oder polymodale Kautschuk-Latices entstehen.

Harzseifen eignen sich vorzugsweise zur Herstellung feinteiliger Polybutadien-und Butadien-Styrol-Latices; sie liefern Polymerisate mit hellem Rohton und guter Verarbeitbarkeit; zur Herstellung homodisperser, grobteiliger Latices sind sie weniger geeignet.

Der Erfindung liegt die Erkenntnis zugrunde, daß durch Verwendung spezieller Emulgatoren in den an sich bekannten Verfahren der absatzweisen Emulsionspolymerisation, der halbkontinuierlichen Emulsionspolymerisation, der Saat-Zulauf-Emulsionspolymerisation, grobteilige Latices in einfacher Weise erhalten werden.

Gegenstand der Erfindung sind Reaktionsprodukte aus 1 Mol eines cycloaliphatischen Diols der Formel I

HO - R - OH    I

mit 2 Mol cycloaliphatischen Carbonsäureanhydriden der Formel II und/oder III

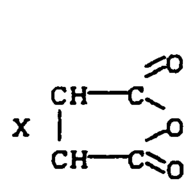

II

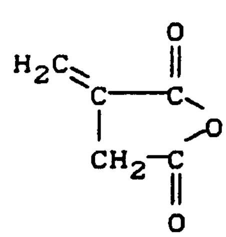

III

wobei

R cycloaliphatische Kohlenwasserstoffreste mit 6 bis 20 C-Atomen, vorzugsweise 6 bis 15 C-Atomen, an die die Hydroxygruppen direkt oder über Methylengruppen gebunden sind

und

X

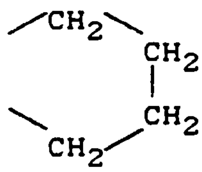 , 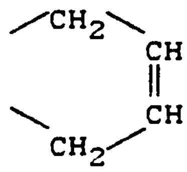 , 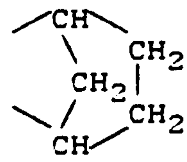 ,

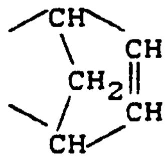 ,

chemische Bindung —

bedeuten, die erhältlich sind durch Zusammenschmelzen des cycloaliphatischen Diols mit dem cycloaliphatischen Carbonsäureanhydrid bei Temperaturen von 100 °C bis 250 °C unter Inertgas, sowie die Alkali- und Ammoniumsalze dieser Reaktionsprodukte.

Ein weiterer Gegenstand der Erfindung ist die Verwendung dieser Reaktionsprodukte als Emulgatoren.

Bevorzugt sind Reaktionsprodukte aus 1 Mol (I) und 2 Mol (II) sowie aus 1 Mol (I), 1 Mol (II) und 1 Mol (III).

Die neuen Reaktionsprodukte (Emulgatoren) sind somit Alkali- oder Ammoniumsalze saurer Harze, welche man durch Umsetzung eines Mols eines cycloaliphatischen Diols mit 2 Mol eines cycloaliphatischen Anhydrids oder mit einer Anhydridmischung, z.B. durch Umsetzung eines Mols eines cycloaliphatischen Diols mit Maleinsäureanhydrid und/oder Itaconsäureanhydrid, erhält.

Die erfindungsgemäßen Reaktionsprodukte können durch die allgemeine Formel

$$Y_1 - O - R - O - Y_2 \quad (IV)$$

mit Y unabhängig voneinander

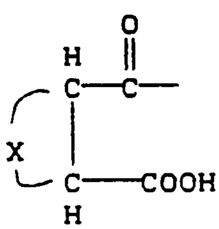 ; 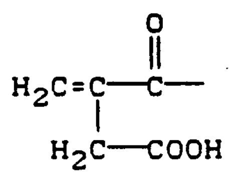 ; 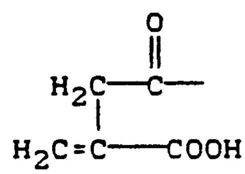

worin

X und R wie oben definiert sind,

wiedergegeben werden.

In Formel (IV) steht R für einen cycloaliphatischen, zweibindingen Rest, einen "Abstandhalter" für die beiden, entweder direkt oder über eine Methylengruppe an das Ringsystem gebundenen Hydroxylgruppen, welche bevorzugt einander diametral gegenüberstehen.

Die Reste R können cycloaliphatische Ringsysteme sein, z.B. aus Sechsringen oder Fünf- und Sechsringen, gegebenenfalls alkylsubstituiert. Solche Ringsysteme lassen sich z.B. aus Dienen und Dienophilen durch die DIELS-ALDER-Reaktion leicht synthetisieren. Bevorzugte Reste R sind:

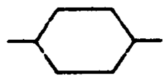
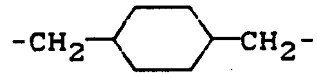

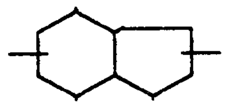
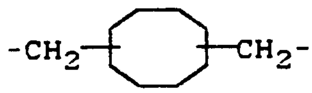

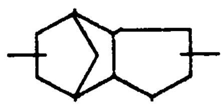
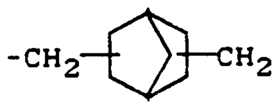

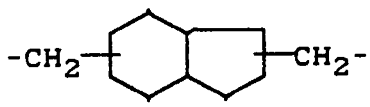
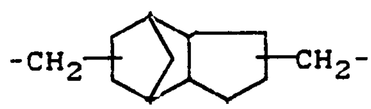

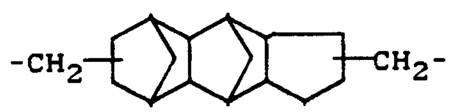

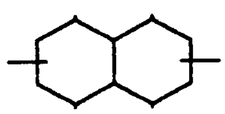
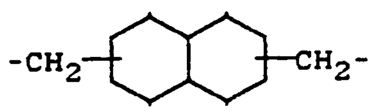

Die als Ausgangsprodukt benötigten Diole können durch Hydroformylierung von cyclischen Dienen oder von ungesättigten Aldehyden oder Alkoholen mit nachfolgender Reduktion der Aldehydgruppe in bekannter Weise hergestellt werden (vgl. Methodicum Chimicum, Kritische Übersicht bewährter Arbeitsmethoden und ihre Anwendung in Chemie, Naturwissenschaft und Medizin, Hrsg. F. Korte, G. Thieme Verlag, Stuttgart, 1975, Seiten 212 bis 215).

Andere Diole stellt man durch Hydrierung der entsprechenden aromatischen Verbindungen wie z.B. Hydrochinon oder durch Addition von Wasser an die entsprechenden Diolefine her.

Als besonders geeignete Diole seien genannt:

1,4-Cyclohexandiol
1,4-Bis-hydroxymethyl-cyclohexan
Bis-hydroxymethyl-hexahydro-4,7-methanoindan (als "TCD-Diol" handelsüblich, hergestellt durch Hydroformylierung von Dicyclopentadien (vgl. US Patent 2 850 536).
Bis-hydroxymethyl-bicyclo-(4,3,0) nonan
Bis-hydroxymethyl-norbornan
Bis-hydroxymethyl-cyclooctan.

Bei den genannten Diolen handelt es sich meist um Isomerengemische.

Als Anhydride, welche mit den genannten Diolen umgesetzt werden können, seien genannt:

Hexahydrophthalsäureanhydrid
Tetrahydrophthalsäureanhydrid
5-Norbornen-2,3-dicarbonsäureanhydrid
Norbornandicarbonsäureanhydrid
Maleinsäureanhydrid
Itaconsäureanhydrid.

Die beiden letztgenannten Anhydride werden bevorzugt in Kombination mit gesättigten Anhydriden mit den oben genannten Diolen umgesetzt. Man erhält copolymerisierbare Emulgatoren.

Die Diole können mit den Anhydriden vorzugsweise in Substanz (in der Schmelze) umgesetzt werden. Bei kleinen Ansätzen kann das Diol mit dem Anhydrid vermischt und in der Schmelze zur Reaktion gebracht werden. Bei größeren Ansätzen werden bevorzugt die geschmolzenen Komponenten getrennt voneinander zu einer Schmelze bereits gebildeten Reaktionsprodukte dosiert. Meist ist es auch vorteilhaft, das Anhydrid bzw. Anhydridgemisch vorzulegen und das Diol nachzudosieren. Bei der Herstellung von unsymmetrischen Emulgatorsäuren kann auch das Diol vorgelegt, danach das Anhydrid der Formel II, zuletzt Maleinsäure- oder Itaconsäureanhydrid zugefügt werden. Die Reaktion kann durch geringe Mengen eines tertiären Amins wie Triethylamin oder Tributylamin beschleunigt werden. Das Ende der Reaktion kann durch Bestimmung der Säurezahl der Schmelze und aus Verschwinden der Anhydridbande im Infrarotspektrum erkannt werden. Die Reaktionsgemische lassen sich durch ihre Säurezahl und durch GPC-Analysen kennzeichnen.

Die Reaktion der Diole mit den Anhydriden wird bevorzugt unter Inertgasatmosphäre bei Temperaturen von 100 bis 250 °C, vorzugsweise von 100 bis 200 °C, durchgeführt. Als Inertgase kommen vorzugsweise Stickstoff oder Argon in Frage.

Für die erfindungsgemäße Verwendung der Reaktionsprodukte als Emulgatoren bei der Emulsionspolymerisation ist es nicht erforderlich, aus den Reaktionsgemischen die reinen Stoffe (Isomeren) z.B. der in Tabelle I angeführten Formeln zu isolieren. Bei den zur Hydroformylierung eingesetzten Diolefinen kann es sich bereits um Stoffgemische handeln. So besteht z.B. Dicyclopentadien aus einem Gemisch von cis- und trans-Diels-Alder-Addukt. Bei der Hydroformylierung wird die Zahl der Isomeren weiter erhöht, so daß die zur Umsetzung mit den Dianhydriden verwendeten Diole meist Isomerengemische sind. Demgemäß sind die in Tabelle I Spalte 1 angeführten Formeln als Isomerengemische zu verstehen, das in Spalte 2 angegebene Molekulargewicht das des Isomerengemisches.

Die bei der Reaktion cyclischer Diole mit den genannten Anhydriden entstehenden Reaktionsgemische werden nach beendeter Umsetzung und nach Abdestillieren oder Absublimieren flüchtiger Bestandteile, insbesondere überschüssiger Anhydride, noch heiß aus dem Reaktor abgelassen und nach dem Abkühlen zerkleinert, bis zum Granulat oder Pulver. Meist sind die so erhaltenen Reaktionsprodukte helle Harze mit Erweichungspunkten oberhalb +20 °C. Einige der Harze zeigen eine zähklebrige Konsistenz, welche an natürliche Harze erinnert. Diese Eigenschaften der Emulgatoren können bei der Herstellung von Butadien-Styrol-Copolymerisaten erwünscht sein.

Zur Herstellung von Emulsionspolymerisaten mit großen Teilchen kommt es darauf an, die Bildung neuer Teilchen während der Polymerisaten zu verhindern.

Teilchenneubildungen bei der Emulsionspolymerisation setzen nicht die Existenz freier Mizellen voraus. Es können sich auch neue Teilchen bilden, wenn die Menge des nachdosierten Emulgators nicht dazu ausreicht, neue Mizellen zu bilden (vgl. A.S. Dunn im Artikel: Emulsion Polymerisation, Seiten 49-50, in Developments in Polymerization Ed. by. R.N. HAWARD, Applied Science Publishers Ltd. 1979).

Wie es zur Bildung von Latexteilchen kommt, ist bis heute nicht vollständig bekannt (vgl. N. Sütterlin, H.J. Kurth, G. Markert, Makromolekulare Chemie 177, 1549-1565 (1976)) insbesonders Seite 1550 Einleitung, Satz 2).

Es war daher weder vorherzusehen noch zu erwarten, daß die erfindungsgemäßen Reaktionsprodukte besonders geeignet zur Herstellung grobteiliger homodisperser Polybutadienlatices sind, insbesonders wenn man bei erhöhter Temperatur im alkalischen Milieu polymerisiert. Zu erwarten war vielmehr, daß diese Verbindungen bei höheren Temperaturen im alkalischen Milieu verseifen und ihre Emulgatorwirkung völlig einbüßen.

Gefunden wurde, daß man mit den erfindungsgemäßen Reaktionsprodukten als Emulgatoren stabile, grobteilige, homodisperse Latices herstellen kann, wobei die Koagulatbildung nicht stärker ist als bei den besten üblichen Emulgatoren. Überraschend war die sehr kleine dazu erforderliche Menge an Emulgator.

In Tabelle I, Nr. 1 bis 3, 5 und Nr. 7 bis 9 sind Beispiele erfindungsgemäßer Emulgatorsäuren angeführt. Allgemein handelt es sich um Dicarbonsäuren, deren Alkali- (Li, Na, K, Ammonium)-Salze wasserlöslich sind und als Emulgatoren bei der Emulsionspolymerisation wirken. Bevorzugt werden die Na- oder K-Salze verwendet.

Die erfindungsgemäßen Emulgatorsäuren sind, insbesondere in pulverisierter Form, in wäßrigen Alkalilaugen löslich. Ein Überschuß von Alkalilauge ist zur Auflösung nicht erforderlich und sollte auch vermieden werden. Da die erfindungsgemäßen Emulgatoren meist in Kombination mit Kaliumperoxodisulfat als Initiator zur Polymerisation von olefinisch ungesättigten Verbindungen eingesetzt werden und beim Zerfall des Kaliumperoxodisulfats Protonen entstehen, ist es empfehlenswert soviel wasserlösliche Base zuzugeben, daß die Polymerisation bei pH 8-12, vorzugsweise 10,5 bis 11,5, abläuft.

Als Monomere, welche mit Hilfe der erfindungsgemäßen Emulgatoren zu grobteiligen wäßrigen Dispersionen polymerisiert werden können, seien insbesonders Butadien, Styrol, Gemische von Butadien und Styrol, Gemische von Butadien und Acrylnitril und schwer wasserlösliche Acrylsäureester oder Methacrylsäureester sowie Vinylester genannt. Daneben eignen sich die neuen Emulgatoren auch zur Polymerisation von Gemischen von Acrylnitril mit Styrol und/oder α-Methylstyrol. Auch halogenhaltige Monomere wie Vinylchlorid oder Chloropren können polymerisiert werden, wobei Polymerisate mit erhöhtem Teilchendurchmesser und verbesserter Thermostabilität resultieren.

Ebenso geeignet sind die erfindungsgemäßen Emulgatoren zur Herstellung von Pfropfkautschuklatices, insbesondere zur Herstellung von Pfropfkautschuklatices auf Basis von Polybutadien oder Butadien/Styrol-Copolymerisaten oder Butadien/Acrylnitril-Copolymerisaten, wobei als Pfropfmonomere beispielsweise Styrol, α-Methylstyrol, Acrylnitril, Methylmethacrylat oder Mischungen aus diesen Monomeren, vorzugsweise Styrol und Acrylnitril im Gewichtsverhältnis 95:5 bis 60:40, zum Einsatz kommen können. Derartige Pfropfkautschuklatices weisen Kautschukgehalte von 5 bis 95 Gew.-%, vorzugsweise von 20 bis 90 Gew.-% auf und können nach Aufarbeitung, beispielsweise durch Elektrolytkoagulation und Trocknung oder durch Sprühtrocknung, in Pfropfkautschukpulver überführt werden, die z.B. zur Herstellung von ABS-Polymerisaten mit ausgezeichneter Thermostabilität geeignet sind. Solche ABS-Formmassen bestehen z.B. aus 10 bis 80 Gew.-%, bevorzugt 20 bis 70 Gew.-%, eines Pfropfkautschuks von Styrol und Acrylnitril oder Methylmethacrylat auf einen teilchenförmigen Kautschuk mit einem mittleren Teilchendurchmesser $d_{50}$ von 0,05 bis 2 µm und einem Kautschukgehalt von 20 bis 90 Gew.-% und 90 bis 20 Gew.-%, bevorzugt 80 bis 30 Gew.-%, eines thermoplastischen Harzes aus 5 bis 40 Gew.-Teilen Acrylnitril und 95 bis 60 Gew.-Teilen Styrol, α-Methylstyrol, p-Methylstyrol, Methylmethacrylat oder Mischungen daraus.

Zur Herstellung grobteiliger Dispersionen, insbesondere Polybudadien-Dispersionen, können die üblichen Verfahren weisen der Emulsionspolymerisation angewendet werden. Erfindungsgemäß werden dabei die neuen Emulgatoren eingesetzt. Sollen besonders homodisperse und grobteilige Latices hergestellt werden, so legt man einen Saatlatex mit wenig Emulgator vor und dosiert Monomere und wäßrige Emulgator-u. ggf. Initiatorlösung Kontinuierlich nach.

Wenn auch Kaliumperoxodisulfat üblicherweise als Initiator verwendet wird, können auch Redoxsysteme, aus organischen Peroxiden, reduzierenden Komponenten und Schwermetallspuren, vorzugsweise in komplexierter Form, verwendet werden. Ebenso geeignet sind auch andere radikalbildende Verbindungen wie Azobisisobutyronitril und seine Abkömmlinge mit wasserlöslich machenden Hilfsgruppen.

Tabelle I

| Nr. | Strukturformel (Isomere nicht berücksichtigt) | °C | Zeit [h] | Molgewicht | Reaktionsgemisch-Erstarrungspunkt [°C] | Säurezahl berechnet | Säurezahl gefunden |
|---|---|---|---|---|---|---|---|
| 1. | 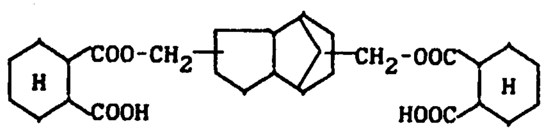 | 110 | 3 | $C_{28}H_{40}O_8$:504,6 | 50-54 | 222,4 | 228 |
| 2. | 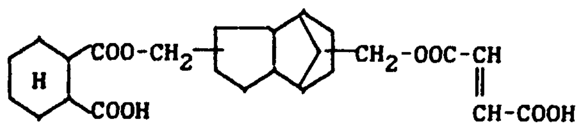 | 110 | 3 | $C_{24}H_{32}O_8$:448,5 | 34-36 | 250,2 | 253 |
| 3. | 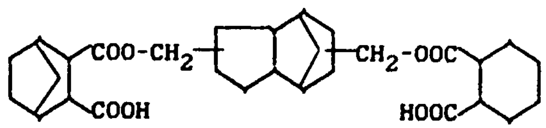 | 120 | 3 | $C_{30}H_{40}O_8$:528,6 | 47-50 | 212,3 | 220 |
| 4.* | 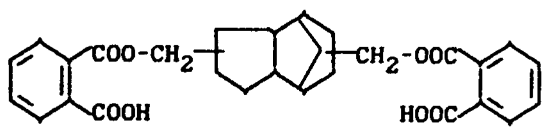 | 130 | 17 | $C_{28}H_{28}O_8$:492,5 | 48-52 | 227,9 | 200 |

In Spalten 3 und 4 sind die Reaktionstemperatur und die Reaktionszeit zur Herstellung der sauren Emulgatorharze angegeben, * nicht erfindungsgemäß

Tabelle I (Fortsetzung)

| Nr. | Strukturformel (Isomere nicht berücksichtigt) | °C | Zeit [h] | Molgewicht | Reaktionsgemisch-Erstarrungspunkt [°C] | Säurezahl berechnet | Säurezahl gefunden |
|---|---|---|---|---|---|---|---|
| 5. | 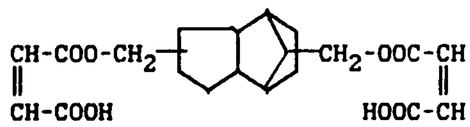 | 110 | 4 | $C_{20}H_{24}O_8$:392,4 | 21-23 | 286 | 280 |
| 6.* | 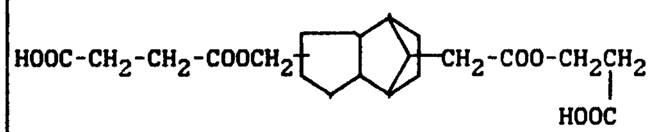 | 130 | 4 | $C_{20}H_{28}O_8$:396,4 | 7-10 | 283,1 | 283 |
| 7. | 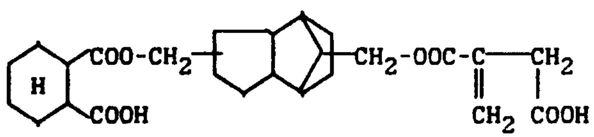 | 120 | 3 | $C_{25}H_{34}O_8$:462,5 | 20-23 | 242,6 | 250 |
| 8. | 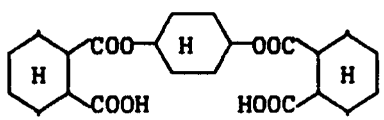 | 120 | 3 | $C_{22}H_{32}O_8$:424,5 | 50-60 | 264,4 | 270 |

* nicht erfindungsgemäß

Tabelle I (Fortsetzung)

| Nr. | Strukturformel (Isomere nicht berücksichtigt) | °C | Zeit [h] | Molgewicht | Reaktionsgemisch-Erstarrungspunkt [°C] | Säurezahl berechnet | Säurezahl gefunden |
|---|---|---|---|---|---|---|---|
| 9. | 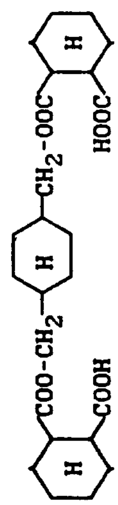 | 120 | 3 | $C_{24}H_{36}O_8$:452,5 | 46-50 | 248,0 | 255 |
| 10* | 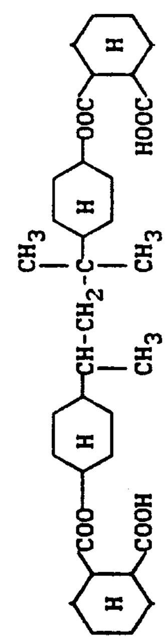 | 150 | 4 | $C_{34}H_{54}O_8$:590,8 | 64-67 | 189,9 | 203 |

* = nicht erfindungsgemäß

Beispiele 1 bis 36

Die gemäß oben angegebener Beschreibung (Umsetzung von 1 Mol cycloaliphatischem Diol mit 2 Mol cycloaliphatischem Anhydrid durch Zusammenschmelzen der Komponenten) erhaltenen erfindungsgemäßen sauren Emulgatorharze 1 bis 3, 5 und 7 bis 9 sowie die nicht erfindungsgemäßen Harze 4, 6 und 10 werden in der nach ermittelter Säurezahl äquivalenten Menge an wäßriger Kalilauge gelöst und auf einen

Feststoffgehalt von 5 Gew.-% eingestellt.

In den Tabellen II bis V sind Polymerisationsergebnisse bei Einsatz verschiedener Monomerer (Styrol, n-Butylacrylat, Vinylversatat, Ethylacrylat) und verschiedener Emulgatorharze zusammengestellt. Die angegebenen mittleren Teilchendurchmesser $d_T$ wurden durch Trübungsmessung ermittelt (vgl. H. Lange Koll. Z.Z. Polymere 223, 24 - 30 (1968).

Zur Polymerisation von Vinylacetat, Vinylpropionat und Ethylacrylat sind die Emulgatorharze meist ungeeignet.

Die Polymerisationsversuche wurden in verkorkten 500 ml-Glasflaschen, welche in Schutzkörben 15 Stunden bei 70 °C im Wasserbad rotierten, unter Ausschluß von Luftsauerstoff (Spülen der Ansätze in den Flaschen mit Stickstoff oder reinem Argon) durchgeführt. Jeder Versuch wurde wie folgt angesetzt:

| | |
|---|---|
| Wasser | 95,9 Gew.Tle |
| 5%ige Emulgatorlösung | 69,7 Gew.Tle |
| 1%ige $Na_2CO_3$-Lösung | 15,4 Gew.Tle |
| 1%ige $K_2S_2O_8$-Lösung | 26,1 Gew.Tle |
| Monomeres | 87,1 Gew.Tle |
| Summe der Gew.Tle | 294,2 Gew.Tle. |

Bei vollständigem Monomerenumsatz resultierten Latices mit Feststoffgehalt 30,9%; die Emulgatormenge beträgt bei allen Versuchen 4%, bezogen auf Monomer; die Initiatormenge liegt bei 0,3% bezogen auf Monomer.

Die Tabellen II bis V zeigen, daß Emulgatoren aus nicht erfindungsgemäßen Anhydriden oder Diolen entweder unerwünscht feinteilige Latices liefern (siehe Versuche 4, 9, 13, 18, 22, 27, 31 und 36) oder aber sehr viel Koagulat verursachen (siehe Versuche 6, 24 und 33). Als besonders vorteilhaft erweisen sich für Styrol und (wie weiter unten gezeigt) Butadien die Emulgatoren entsprechend Formel 1, 2 und 9 der Tabelle I, da sie grobe Teilchen ergeben, und auch meist wenig Koagulat entsteht.

Tabelle II: Polymerisation von Styrol

| Beispiel | Eingesetzter Emulgator | % Feststoff des Latex | Koagulat [g] | pH-Wert | Teilchendurchmesser $d_T$ (nm) |
|---|---|---|---|---|---|
| 1 | Di-K-Salz von 1 | 30,8 | 0,2 | 9,3 | 180 |
| 2 | Di-K-Salz von 2 | 30,5 | 0,4 | 7,9 | 220 |
| 3 | Di-K-Salz von 3 | 30,6 | <0,1 | 8,0 | 100 |
| 4* | Di-K-Salz von 4 | 30,5 | <0,1 | 8,1 | 70 |
| 5 | Di-K-Salz von 5 | 21,3 | 10 | 7,8 | 360 |
| 6* | Di-K-Salz von 6 | 24,5 | viel Koagulat | - | - |
| 7 | Di-K-Salz von 8 | 29,5 | 5,3 | 9,8 | 600 |
| 8 | Di-K-Salz von 9 | 30,4 | 1,5 | 9,3 | 290 |
| 9* | Di-K-Salz von 10 | 30,8 | <0,1 | 9,2 | 70 |

* = nicht erfindungsgemäß

Tabelle III: Polymerisation von n-Butylacrylat

| Beispiel | Eingesetzter Emulgator | % Feststoff des Latex | Koagulat [g] | pH-Wert | Teilchendurchmesser $d_T$ (nm) |
|---|---|---|---|---|---|
| 10 | Di-K-Salz von 1 | 30,4 | 1,3 | 7,8 | 130 |
| 11 | Di-K-Salz von 2 | 30,4 | 1,1 | 7,5 | 160 |
| 12 | Di-K-Salz von 3 | 30,3 | 2,0 | 7,3 | 110 |
| 13* | Di-K-Salz von 4 | 30,4 | <0,1 | 7,6 | 70 |
| 14 | Di-K-Salz von 5 | 29,3 | 3,8 | 7,0 | 200 |
| 15* | Di-K-Salz von 6 | 30,0 | 3,1 | 6,7 | 180 |
| 16 | Di-K-Salz von 8 | 29,3 | 7,2 | 7,3 | 260 |
| 17 | Di-K-Salz von 9 | 30,1 | 2,9 | 7,4 | 170 |
| 18* | Di-K-Salz von 10 | 30,7 | 0,7 | 8,1 | 60 |

* = nicht erfindungsgemäß

Tabelle IV: Polymerisation von Vinylversatat

| Beispiel | Eingesetzter Emulgator | % Feststoff des Latex | Koagulat [g] | pH-Wert | Teilchendurchmesser $d_T$ (nm) |
|---|---|---|---|---|---|
| 19 | Di-K-Salz von 1 | 26,0 | 1,7 | 7,8 | 110 |
| 20 | Di-K-Salz von 2 | 26,8 | 5,3 | 7,6 | 800 |
| 21 | Di-K-Salz von 3 | 26,5 | 6,1 | 7,5 | 370 |
| 22* | Di-K-Salz von 4 | 30,4 | 1,8 | 7,3 | 80 |
| 23 | Di-K-Salz von 5 | | Koagulat | | |
| 24* | Di-K-Salz von 6 | | Koagulat | | |
| 25 | Di-K-Salz von 8 | 25,8 | 21,9 | 6,2 | 2200 |
| 26 | Di-K-Salz von 9 | 28,0 | 10,6 | 6,2 | 1300 |
| 27* | Di-K-Salz von 10 | 30,2 | 1,8 | 8,6 | 100 |

* = nicht erfindungsgemäß

Tabelle V: Polymerisation von Ethylacrylat

| Beispiel | Eingesetzter Emulgator | % Feststoff des Latex | Koagulat [g] | pH-Wert | Teilchendurchmesser $d_T$ (nm) |
|---|---|---|---|---|---|
| 28 | Di-K-Salz von 1 | 29,4 | 4,5 | 7,6 | 170 |
| 29 | Di-K-Salz von 2 | 28,0 | 13,5 | 7,3 | 210 |
| 30 | Di-K-Salz von 3 | 28,8 | 9,6 | 7,3 | 160 |
| 31* | Di-K-Salz von 4 | 30,2 | 2,6 | 7,2 | 100 |
| 32 | Di-K-Salz von 5 | 28,8 | 9,9 | 7,0 | 340 |
| 33* | Di-K-Salz von 6 | 26,7 | 17,6 | 6,6 | 420 |
| 34 | Di-K-Salz von 8 | 26,9 | 19,4 | 7,0 | 470 |
| 35 | Di-K-Salz von 9 | 26,5 | 16,7 | 7,2 | 270 |
| 36* | Di-K-Salz von 10 | 30,2 | 1,4 | 8,0 | 80 |

* = nicht erfindungsgemäß

Beispiel 37 (Keimlatex als Ausgangsmaterial)

In den nachfolgenden Beispielen wird ein Keimlatex des mittleren Teilchendurchmessers von ca. 100 nm benötigt. Es wurde wie folgt hergestellt:

In einen 6-Liter Edelstahlautoklaven mit stufenlos regulierbarem Blattrührer und Innentemperaturregelung werden eingebracht:

| | |
|---|---|
| Entionisiertes Wasser | 2282,00 g |
| Na-Salz der disproportionierten Abietinsäure (Handelsbezeichnung DRESINATE® 731), 10 Gew.-% in Wasser | 388,00 g |
| Tert.-Dodecylmercaptan 2,5 Gew.-%ige | 6,00 g |
| $K_2S_2O_8$-Lösung in Wasser | 155,00 g |
| Kaliumhydroxid, fest (reinst) | 1,15 g |

Der Autoklavenraum wird evakuiert und der Unterdruck mit reinem Stickstoff ausgeglichen (3 Mal). In den erneut evakuierten Autoklavenraum wird danach eingezogen:

| | |
|---|---|
| Butadien | 1900,00 g |
| Umdrehungszahl des Blattrührers: | 125 Upm [$min^{-1}$] |

Das Gemisch wird auf 65 °C aufgeheizt und ca. 20 Stunden bis zum Druckabfall auf 4 bar auspolymerisiert. Es werden ca. 4,6 kg eines ca. 40%igen Polybutadienlatex erhalten. Der Latex hat einen mittleren Teilchendurchmesser DAV von ca. 100 nm, ermittelt mit der Ultrazentrifugentechnik

Beispiele 38 bis 41 (Vergleiche)

Herstellung von Polybutadienlatices durch Saat-Zulaufpolymerisation; Mittlerer Teilchendurchmesser ca. 200 nm);

Der Polybutadienlatex des Beispiels 37 wird als Keimlatex vorgelegt und man dosiert so viel Butadien nach, daß der mittlere Teilchendurchmesser durch Polymerisation etwa verdoppelt wird.

In Tabelle VI sind die Polymerisationsrezepturen der Beispiele 38-41 für die verschiedenen Polymerisationstemperaturen zusammengestellt. Die Mischungen A werden vorgelegt, der Autoklavenraum mehrfach evakuiert und mit Stickstoff das Vakuum aufgehoben. Nach erneutem Evakuieren wird Butadien (B) eingezogen und auf die jeweilige Temperatur (60° oder 70° oder 80° oder 90 °C) aufgeheizt.

Die Emulgator/Aktivatorlösung C wird umsatzabhängig nachdosiert. Jeweils ein Drittel von C wird bei 20, bei 30, schließlich bei 40 Gew.% Feststoffgehalt des Latex zugegeben. Man kann die Zugaben auch noch feiner abstufen, z.B. nach allen 5% Feststoffgehaltserhöhung den 10. Teil von C zugeben.

In Tabelle VII ist die Zeit-Feststoffgehaltsrelation für diese Versuchsserie angegeben.

Tabelle VII ist zu entnehmen, daß die Polymerisationsreaktionen bei erhöhter Temperatur wesentlich schneller verlaufen.

Nach M. Morton und P.F. Salatiello (J. Polymer Science, 8, 215-224 (1952), vgl. S. 222) ist die Wachstumskonstante $K_w$ der Butadienpolymerisation wie folgt von der Temperatur abhängig:

$$K_w = 1{,}2 \cdot 10^8 \exp(-9300/R \cdot T)\ [1 \cdot Mol^{-1} \cdot sec^{-1}]$$

Die Aktivierungsenergie der Wachstumsreaktion beträgt demnach 9300 cal. Setzt man für die Gaskonstante den entsprechenden Wert in cal (1,986 cal) ein, so resultiert:

$$K_w = 1{,}2 \cdot 10^8 \exp(-9300/(1{,}986 \cdot (273{,}15 + °C))$$

| Temp [°C] | $K_w$ |
|---|---|
| 0 | ~ 4 |
| 10 | 8 |
| 20 | 14 |
| 30 | 23 |
| 40 | 38 |
| 50 | 61 |
| 60 | 94 |
| 70 | 142 |
| 80 | 209 |
| 90 | 301 |
| 100 | 425 |

$K_w$: $\frac{\text{[Liter Latexteilchenvolumen]}}{\text{[Mol Butadien·sec]}}$

Tabelle VI

| Beispiel Nr. | 38 | 39 | 40 | 41 | |
|---|---|---|---|---|---|
| Polymerisationstemperatur | 60 | 70 | 80 | 90 | |
| Ention. Wasser (g)<br>KOH, fest (g)<br>Polybutadienlatex 35 %ig Teilchen ø 100 nm (g)<br>Na-Salz der disproportionnierten Harzsäure wäßr. 10 % Lösung (g) (Dresinate® 731)<br>Tert. Dodecylmercaptan (g)<br>$K_2S_2O_8$-Lösung, 2,5 %ig (g) (in $H_2O$) | 957,00<br>1,72<br>522,00<br>73,00<br>4,93<br>164,4 | 957,00<br>1,72<br>522,00<br>73,00<br>4,93<br>82,2 | 957,00<br>1,72<br>522,00<br>73,00<br>4,93<br>41,1 | 957,00<br>1,72<br>522,00<br>73,00<br>4,93<br>20,7 | A |
| Butadien (g) | 1461,0 | 1461,0 | 1461,0 | 1461,0 | B |
| Dresinate® 731: Na-Salz der disproportionnierten Harzsäure wäßrige 10 % Lösung (g)<br>$K_2S_2O_8$-Lösung, 2,5 %ig | 173,5<br>- | 173,5<br>82,2 | 173,5<br>123,3 | 173,5<br>143,7 | C |

Tabelle VI (Fortsetzung)

| Beispiel Nr. | 38 | 39 | 40 | 41 |
|---|---|---|---|---|
| Koagulat (g) | kein | kein | 25 | kein |
| Feststoffgehalt % | ca. 50 % | ca. 50 % | ca. 50 % | ca. 50 % |
| pH-Wert | 11,1 | 10,4 | 11,2 | 11,3 |
| Auslaufzeit nach DIN 53 211 [sec], (4 mm ø Düse) | 21,7 | 21,4 | 26,4 | 24,9 |
| LKS-ø [nm] (Laserkorrelations-spektr.) | 210 | 200 | 198 | 200 |
| DAN | 193,3 | 164 | 169 | 139 |
| DAL | 195,6 | 171 | 174 | 157 |
| DAF(vgl. DIN 53206) | 199,8 | 177 | 178 | 173 |
| DAV | 208,1 | 181 | 181 | 184 |
| DVN | 196,2 | 171 | 173 | 156 |
| D0 * | 157 | 95,2 | 101 | 80 |
| D10 | 180 | 153 | 157 | 104 |
| D20 | 184 | 173 | 172 | 181 |
| D30 | 186 | 174 | 175 | 189 |
| D40 | 188 | 178 | 178 | 192 |
| D50 | 190 | 184 | 181 | 195 |
| D60 | 193 | 188 | 187 | 196 |
| D70 | 197 | 190 | 189 | 197 |
| D80 | 204 | 194 | 193 | 200 |
| D90 | 223 | 199 | 200 | 206 |
| D100 | 585 | 218 | 218 | 229 |
| DAV/DAN | 1,08 | 1,10 | 1,07 | 1,32 |

* integrale Latexteilchendurchmesserverteilung nach W. Scholtan und H. Lange Koll.Z. u.Z. Polymere 250, 782 - 796 (1972)

Tabelle VII

| Zeit-Feststoffgehalt-Relation | | | | |
|---|---|---|---|---|
| Zeit [h] | B = 38 | 39 | 40 | 41 |
| | 60 °C | 70 °C | 80 °C | 90 °C |
| 1 | F = 12,5 | 14,5 | 15,8 | 20,5 |
| 2 | 13,6 | 17,0 | 20,0 | 27,5 |
| 3 | 15,0 | 20,0 | 23,5 | 34,0 |
| 4 | 16,0 | 23,0 | 27,5 | 40,0 |
| 5 | 17,5 | 26,0 | 31,5 | 46,5 |
| 6 | 18,8 | 29,0 | 35,5 | 49,0 |
| 7 | 20,0 | 32,0 | 39,0 | 50,0 |
| 8 | 21,6 | 35,0 | 38,5 | |
| 9 | 22,8 | 38,0 | 46,5 | |
| 10 | 24,0 | 40,5 | 48,7 | |
| 11 | - | - | 50,0 | |
| 15 | 31,0 | 45,0 | | |
| 20 | 39,0 | 48,5 | | |
| 25 | 44 | 50,0 | | |
| 32 | 49,5 | | | |
| B = Beispiel-Nr.<br>F = Feststoffgehalt in Gew.-% (Latex) | | | | |

10 Grad Temperaturerhöhung beschleunigen demnach im Bereich konstanter Monomerenkonzentration und Radikalkonzentration im Latexteilchen die Umsatzgeschwindigkeit etwa um den Faktor 1,5.

Tabelle VI zeigt, daß Saatlatexansätze mit Emulgatornachdosierung im Temperaturbereich von 60° bis 90°C, ausgehend vom gleichen Keimlatex des Teilchendurchmessers von ca. 100 nm, zu Endlatices von ca. 200 nm Teilchendurchmesser führen.

Versucht man nun, ausgehend von Keimlatices mit 100 nm mittleren Teilchendurchmesser, Endlatices mit mittleren Teilchendurchmessern von 400 nm durch erhöhte Monomerenzufuhr herzustellen, so bilden sich bei Verwendung von DRESINATE® als Emulgator und Kaliumperoxodisulfat als Initiator von einer bestimmten Latexteilchengröße an, die bei ca. 200 nm liegt, neue Latexteilchen, dies umso leichter, je höher die Polymerisationstemperatur und die zur Verhinderung der Koagulatbildung nötige Emulgatormenge ist.

Beispiele 42 bis 49

Versuche zur Herstellung grobteiliger Polybutadienlatices durch Saat-Zulaufpolymerisationsverfahren

Die gemäß Beispielen 38 bis 41 Tabelle VI hergestellten Polybutadienlatices mit Teilchendurchmessern von ca. 200 nm werden als Keimlatices (vgl. Tabelle VIII, Zeile 6) vorgelegt. Das Polymerisationsverfahren entspricht etwa dem der Beispiele 38-41. Derselbe Keimlatex wird nun einmal in Gegenwart des Na-Salzes der disproportionierten Abietinsäure (DRESINATE® 731), das andere Mal unter Zuhilfenahme eines bevorzugten, erfindungsgemäßen Emulgators (Di-Kalium-Salz der Säure der Formel 1 (vgl. Tabelle I) durch Aufpolymerisieren von Butadien vergröbert, wobei Zugabe von einem Drittel der Emulgator-Aktivatorlösung C nach Erreichen von 20 %, 30 % sowie 40 % Feststoffgehalt des Latex erfolgen.

Tabelle VIII zeigt, daß bei Einsatz des erfindungsgemäßen Emulgators die Koagulatmenge stets niedriger ist als bei Verwendung von DRESINATE®.

Ferner beweist die Ultrazentrifugenanalyse der Dispersionen, vgl. Tabelle VIII, daß bei Verwendung des erfindungsgemäßen Emulgators die Latexteilchendurchmesser im Mittel wesentlich größer ausfallen und die Latexteilchendurchmesserverteilung enger ist. Demgemäß liegt auch das Verhältnis DAV/DAN der Endlatices bei Verwendung der erfindungsgemäßen Emulgatoren näher bei 1,0 als bei Verwendung von DRESINATE®.

Tabelle VIII

| Temperatur: | 60 °C | | 70 °C | | 80 °C | | 90 °C | |
|---|---|---|---|---|---|---|---|---|
| Beispiel Nr: | 42 | 43xx | 44 | 45xx | 46 | 47xx | 48 | 49xx |
| Ention. Wasser<br>KOH, fest<br>Keimlatex Bsp.<br>35 %ig | 973,8*<br>1,72<br>38<br>504,9* | 973,8<br>1,72<br>38<br>504,9 | 1052<br>1,72<br>39<br>426,9 | 1052<br>1,72<br>39<br>426,9 | 1052<br>1,72<br>40<br>426,9 | 1052<br>1,72<br>40<br>426,9 | 1052<br>1,72<br>41<br>426,9 | 1052<br>1,72<br>41<br>426,9 |
| 10 %ige Dresinate 731-Lösung | 39,6* | - | 37,6 | - | 41,0 | - | 41,7 | - |
| 10 %ige Lösung Emulgator Formel 1 in Tab. 1 Di-K-Salz | - | 39,6 | - | 37,6 | - | 41,0 | - | 41,7 |
| tert. Dodecyl-mercaptan | 4,93* | 4,93 | 4,93 | 4,93 | 4,93 | 4,93 | 4,93 | 4,93 |
| $K_2S_2O_8$-Lösung 2,5 %ig | 164,3* | 164,3 | 82,2 | 82,2 | 41,1 | 41,1 | 20,6 | 20,6 |
| Butadien | 1467* | 1467 | 1494 | 1494 | 1494 | 1494 | 1494 | 1494 |
| 10 %ige Dresinate-Lösung | 130,3* | - | 147,5 | - | 160,8 | - | 163,5 | - |
| 10 %ige Lösung Emulgator 1, Di-K-Salz | - | 130,3 | - | 147,5 | - | 160,8 | - | 164,5 |
| $K_2S_2O_8$-Lösung 2,5 %ig | - | - | 82,2 | 82,2 | 123,3 | 123,3 | 143,7 | 143,7 |

* alle Angaben in [g]  xx erfindungsgemäß

Tabelle VIII (Fortsetzung)

| Temperatur: | 60 °C | | 70 °C | | 80 °C | | 90 °C | |
|---|---|---|---|---|---|---|---|---|
| Beispiel Nr: | 42 | 43*** | 44 | 45*** | 46 | 47*** | 48 | 49*** |
| Koagulat (g) | 43 | 20 | 64,5 | 5,6 | 101,5 | 2,0 | 69 | 44 |
| pH-Wert | 11,5 | 12,0 | 11 | 11 | 10,7 | 11,0 | 11,5 | 12,0 |
| u = DAV/DAN | 1,41 | 1,03 | 1,45 | 1,04 | 1,19 | 1,04 | 1,29 | 1,04 |
| DAN* | 174,3 | 329,5 | 130,3 | 250,6 | 188,3 | 296,3 | 148,0 | 275,2 |
| DAL | 193,9 | 332,0 | 149,0 | 253,6 | 203,4 | 300,2 | 162,0 | 278,0 |
| DAF | 218,5 | 334,8 | 169,8 | 257,0 | 215,2 | 304,2 | 176,4 | 281,8 |
| DAV | 245,8 | 338,2 | 188,9 | 260,9 | 224,2 | 308,3 | 191,2 | 287,2 |
| DVN | 194,7 | 332,1 | 148,8 | 253,7 | - | 300,2 | - | 278,4 |
| D0 ITGV** | 104 | 270 | 84 | 207 | 102 | 236 | 85 | 219 |
| D10 | 136 | 296 | 95 | 224 | 195 | 259 | 127 | 242 |
| D20 | 157 | 314 | 117 | 231 | 204 | 271 | 162 | 253 |
| D30 | 186 | 322 | 174 | 236 | 207 | 281 | 166 | 263 |
| D40 | 209 | 327 | 181 | 242 | 212 | 293 | 169 | 277 |
| D50 | 236 | 332 | 191 | 249 | 219 | 312 | 172 | 287 |
| D60 | 265 | 337 | 202 | 263 | 227 | 322 | 181 | 294 |
| D70 | 293 | 343 | 214 | 278 | 233 | 329 | 198 | 300 |
| D80 | 319 | 350 | 228 | 288 | 244 | 337 | 226 | 306 |
| D90 | 350 | 364 | 248 | 300 | 275 | 345 | 265 | 314 |
| D100 | 407 | 555 | 298 | 785 | 312 | 780 | 353 | 1600 |

* Definitionen nach DIN 53 206
** ITGV = Integrale Latexteilchendurchmesserverteilung, ermittelt mit der Ultrazentrifuge
*** erfindungsgemäß

Beispiel 50 (erfindungsgemäß)

Polybutadienlatex des Teilchendurchmessers d = 200 nm

In einen 6 Liter Edelstahlautoklaven, Betriebsdruck bis 20 bar mit stufenlos regelbarem Blattrührer (150 Umdrehungen pro Minute) und mit Innentemperaturregelung werden unter Ausschluß von Luftsauerstoff eingefüllt:

| | |
|---|---|
| Entionisiertes Wasser | 2282,00 g |
| Emulgator Formel 1, Tabelle I, Di-K-Salz | 50,00 g |
| Tert.Dodecylmercaptan | 5,00 g |
| 2,5 %ige wäßrige Kaliumperoxodisulfatlösung | 155,00 g |
| KOH fest (100 %ig) | 1,15 g |
| Butadien | 1650,00 g |

Das Gemisch wird auf 65 °C aufgeheizt und 32 Stunden bis zum Druckabfall auspolymerisiert.

Es werden ca. 4000 g eines koagulatfreien 39-40 %igen Polybutadienlatex erhalten. Der Latex läßt sich ohne Schaumbildung von Restmonomeren befreien, indem ca. 10 % des im Latex enthaltenen Wassers abdestilliert und durch entionisiertes, auf pH = 9 mit KOH alkalisiertes Wasser ersetzt werden.

Eine Untersuchung des Latex mit der Ultrazentrifuge ergab folgende Teilchendurchmesserverteilung:

| | | |
|---|---|---|
| D0 | 90 | DAN 166,4 |
| D10 | 132 | DAL 177,1 |
| D20 | 192 | DAF 185,3 |
| D30 | 196 | DAV 191,1 |
| D40 | 197 | DVN 176,1 |
| D50 | 198 | |
| D60 | 198 | |
| D70 | 199 | |
| D80 | 201 | DAV/DAN = 1,15 |
| D90 | 208 | |
| D100 | 224 | |

Beispiel 51 (erfindungsgemäß)

Herstellung eines Polybutadienlatex des mittleren Teilchendurchmessers DAV = 250 nm nach Zulaufverfahren

In einen 40 Liter Edelstahlautoklaven, Betriebsdruck bis 25 bar mit stufenlos regelbarem Blattrührer (120 Upm) und mit geregelter Innentemperatur werden eingefüllt:

| | |
|---|---|
| Entionisiertes Wasser | 15 350,00 g |
| Kaliumhydroxid, fest | 87,50 g |
| Emulgatorharz Formel 1, Tab. 1 (fein pulverisiert) | 332,50 g |

Der pH-Wert der klar gelösten wäßrigen Vorlage liegt bei ca. 11,5.

Nach mehrmaligem Evakuieren und Begasen mit Stickstoff wird erneut evakuiert und danach ein Gemisch von

| | |
|---|---|
| Butadien | 2900,00 g |
| Tert. Dodecylmercaptan | 9,00 g |

eingezogen. Das Gemisch wird unter Rühren auf 65 °C aufgeheizt und danach die Polymerisation durch Zudrücken einer Lösung von

| | |
|---|---|
| Kaliumperoxodisulfat in Wasser 2,5 %ig | 1043,00 g |

gestartet. Nach Erreichen eines Feststoffgehaltes von 6-10 Gew.-% wird ein Gemisch von:

| | |
|---|---|
| Butadien | 8250,00 g |
| Tert. Dodecylmercaptan | 26,00 g |

im Verlaufe von 55 h gleichmäßig zudosiert.

Nach Zugabe des Butadiens rührt man bei erhöhter Temperatur (70 °C) nach, bis der Druck auf 4 bar abgefallen ist.

Der Feststoffgehalt des Rohlatex beträgt dann ca. 39-40 %.

Die gesamte Polymerisation wahrt ca. 75 Stunden.

Das im Autoklaven noch enthaltene Butadien wird durch Entspannen des Reaktors über Kopf bei ca. 50 °C und nachfolgender Kondensation weitgehend entfernt, der Rohlatex der Wasserdampfdestillation unterworfen, bis im Latex kein Butadien und Divinylcyclohexen mehr nachweisbar ist.

Der entmonomerisierte Latex wird von geringfügigen husscheidungen durch Filtration über Siebe der Maschenweite von 50 µ befreit. Er besitzt einen mittleren Latexteilchendurchmesser DAV = 250 nm, ermittelt mit Hilfe der Ultrazentrifuge, das Polymerisat einen Quellungsindex von 25 und einen Gelanteil von 85 %.

Beispiel 52

Polybutadienlatex des Teilchendurchmessers 370 nm (erfindungsgemäß)

In einen 6 Liter Edelstahlautoklaven gemäß Beispiel 50 werden eingefüllt:

| | |
|---|---|
| Entionisiertes Wasser | 2524,0 g |
| Emulgator Formel 9 (Tab. I) Di-Kalium-Salz | 55,0 g |
| Tert. Dodecylmercaptan | 5,7 g |
| 2,5 %ige wäßrige $K_2S_2O_8$-Lösung | 172,0 g |
| KOH fest (100 %ig) | 1,3 g |
| Butadien | 1832,0 g |

Die Polymerisation wird 100 Stunden bei 65 °C durchgeführt, wonach der Druck auf ca. 6 bar abgefallen ist. Es resultiert ein 39 %iger Polybutadienlatex des mittleren Teilchendurchmessers DAV = 376 nm.

| Ultrazentrifugen-Analysen-Befund: | | |
|---|---|---|
| D0 | 339 | DAN 371,2 |
| D10 | 353 | DAL 372,1 |
| D20 | 358 | DAF 373,5 |
| D30 | 361 | DAV 375,7 |
| D40 | 364 | DVN 372,3 |
| D50 | 367 | |
| D60 | 370 | |
| D70 | 373 | DAV/DAN = 1,01 |
| D80 | 375 | |
| D90 | 383 | |
| D100 | 1000 | |

Beispiel 53

Herstellung eines Polybutadienlatex des mittleren Latexteilchendurchmessers 350 nm (Saat-Zulauf-Verfahren) (erfindungsgemäß)

In einen 40 Liter Edelstahlautoklaven, Betriebsdruck bis 25 bar mit stufenlos regelbarem Blattrührer (120 Upm) und mit geregelter Innentemperatur werden unter Ausschluß von Luftsauerstoff eingefüllt:

| | |
|---|---|
| Entionisiertes Wasser | 8000,00 g |
| Kaliumchlorid | 30,00 g |
| Emulgator 1 (Tab. I), Disäure pulverisiert | 15,50 g |
| Kaliumpersulfat $K_2S_2O_8$ fest | 10,00 g |
| Ätzkali. KOH fest (100 %ig) | 7,80 g |
| Polybutadienlatex des Teilchendurchmessers 100nm, 35 %ig gemäß Beispiel 37 | 507,00 g |

Der Autoklavenraum wird 3 Mal evakuiert und mit Stickstoff der Unterdruck aufgehoben. Nach erneutem Evakuieren wird aus einem Vorratsgefäß:

| | |
|---|---|
| Butadien | 3000,00 g |
| n-Dodecylmercaptan | 9,00 g |

ins Vakuum eingezogen.

Danach wird auf 60 °C aufgeheizt. Nach Erreichen eines Latex-Feststoffgehaltes von 10 % werden folgende Mengenströme in jeweils 70 Stunden zudosiert:

| Aktivator-Emulgator-Zulauf (klare Lösung) | |
|---|---|
| Entionisiertes Wasser | 7113,00 g |
| Kaliumperoxodisulfat $K_2S_2O_8$ | 30,00 g |
| Emulgator 1 (Tab. I) Disäure | 180,00 g |
| Ätzkali, KOH fest | 8,90 g |

| Monomerenzulauf (homogene Lösung) | |
|---|---|
| Butadien | 13 000,00 g |
| n-Dodecylmercaptan | 39,00 g |

Die Polymerisationstemperatur wird bei Zulaufbeginn auf 70 °C konstant festgesetzt. Nach einer Polymerisationszeit von ca. 90 Stunden ist ein ca. 50 %iger Polybutadienlatex entstanden. Im Autoklaven und im Latex befinden sich keine nennenswerten Koagulatmengen.

Der Latex läßt sich ohne Schaumbildung entmonomerisieren. Das Polymerisat besitzt einen Gelanteil von ca. 75-80 % und einen Quellungsindex von 25-30. Die Teilchendurchmesserverteilung des Latex ist sehr eng und die mittleren Teilchendurchmesser betragen. ca. 350 nm, wie aus Abbildung 1 (Elektronenmikroskopische Aufnahme, Kontrastierung mit Osmiumtetroxid) hervorgeht.

Der so auch im großtechnischen Maßstab herstellbare Latex ist als Pfropfgrundlage für ABS-Polymerisate und andere thermoplastisch verarbeitbare schlagzähe Formmassen hervorragend geeignet (vgl. Beispiel 57).

Beispiel 54

Saat-Zulaufverfahren gemäß Beispiel 53 mit anderem, ebenfalls erfindungsgemäßem Emulgator

Beispiel 53 wird wiederholt, jedoch anstelle des dort beschriebenen Emulgators der Emulgator mit der idealisierten Struktur 7 (vgl. Tabelle I) als Di-Kaliumsalz in gleicher Gramm-Menge eingesetzt.

Nach einer Polymerisationszeit von ca. 100 Stunden ist ein ca. 50 %iger Polybutadienlatex entstanden. Seine Teilchengrößenverteilung wurde mit Hife der Ultrazentrifuge bestimmt

| | | |
|---|---|---|
| D0 | 334 | DAN 418,6 |
| D10 | 393 | DAL 422,0 |
| D20 | 398 | DAF 427,0 |
| D30 | 402 | DAV 435,4 |
| D40 | 406 | DVN 422,5 |
| D50 | 410 | |
| D60 | 415 | |
| D70 | 422 | |
| D80 | 432 | |
| D90 | 490 | DAV/DAN = 1,04 |
| D100 | 1000 | |

Der Gelgehalt des Polymerisates liegt bei 70 %, der Quellungsindex bei 30.

Auch dieser Latex ist als Pfropfgrundlage zur Herstellung schlagzäher Formmassen hervorragend geeignet.

Beispiel 55

Saat-Zulaufpolymerisationsverfahren mit erfindungsgemäßem Emulgator und mit einem Redox-Initiatorsystem

In einen Autoklaven gemäß Beispiel 53 werden eingefüllt:

| | | |
|---|---|---|
| Entionisiertes Wasser | 8000,00 | A |
| Emulgator gemäß Formel 1 Tabelle I, Disäure, pulverisiert | 15,50 | |
| Kaliumhydroxid, fest, 100 %ig | 3,50 | |
| Polybutadienlatex des Teilchendurchmessers 100 nm gemäß Beispiel 37 | 507,00 | |

Vorratsgefäß I

| | | |
|---|---|---|
| Butadien | 1500,00 | B |
| n-Dodecylmercaptan | 9,00 | |

Vorratsgefäß II

| | | |
|---|---|---|
| Butadien | 1500,00 | C |
| p-Menthanhydroperoxid 50 %ig | 7,00 | |

| Vorratsgefäß III | | |
|---|---|---|
| Entionisiertes Wasser<br>Natriumformaldehydsulfoxylat(Rongalit C®), fest<br>Fe-II-Ethylendiamintetraessigsäure-Komplex, 0,05 molare Lösung wäßrig. | 490,00<br>1,50<br>5,00 | D |

| Vorratsgefäß IV | | |
|---|---|---|
| Entionisiertes Wasser<br>Rongalit C®, fest<br>Emulgatorsäure, gemäß Formel 1, Tab. I<br>KOH, fest | 6623,00<br>4,50<br>170,60<br>38,60 | E |

| Vorratsgefäß V | | |
|---|---|---|
| Butadien<br>n-Dodecylmercaptan | 8654,00<br>39,00 | F |

| Vorratsgefäß VI | | |
|---|---|---|
| Butadien<br>p-Menthanhydroperoxid, 50 %ig | 4347,00<br>29,80 | G |

Nach Einfüllen der Mischung A wird der Autoklav mehrfach evakuiert und mit Stickstoff der Druck ausgeglichen. Nach erneutem Evakuieren werden die Gemische B und C eingezogen.

Der Autoklav wird auf 70 °C Innentemperatur aufgeheizt, danach wird D hinzugegeben.

Sobald ein Feststoffgehalt des Rohlatex von ca. 7 % erreicht ist, werden die Mengenströme:

E : im Verlauf von 70 Stunden
F : im Verlauf von 55 Stunden
G : im Verlauf von 60 Stunden

in den Reaktor eindosiert.

Nach 100 Stunden Polymerisationszeit wird die Polymerisation abgebrochen, der Rohlatex entspannt und entmonomerisiert.

Die Latexteilchendurchmesserverteilung des koagulatfreien, entmonomerisierten Latex sieht wir folgt aus:

| | | |
|---|---|---|
| D0 | 219 | DAN 389 |
| D10 | 374 | DAL 391 |
| D20 | 378 | DAF 393 |
| D30 | 382 | DAV 395 |
| D40 | 386 | DVN 391 |
| D50 | 389 | |
| D60 | 393 | |
| D70 | 397 | |
| D80 | 402 | DAV/DAN = 1,015 |
| D90 | 412 | |
| D100 | 1100 | |

Der Latex ist als Pfropfgrundlage zur Herstellung von ABS-Polymerisaten und sonstigen thermoplastisch verarbeitbaren schlagzähen Chemiewerkstoffen sehr gut geeignet und zeigt eine gegenüber der Persulfataktivierung noch weiter verbesserte Thermostabilität.

Beispiel 56 (nicht erfindungsgemäß)

Beispiel 53 wird wiederholt, jedoch anstelle des dort angeführten erfindungsgemäßen Emulgators die gleiche Menge (in g) an DRESINATE® 731 verwendet.

Nach einer Polymerisationszeit von etwa 80 Stunden ist der Druck auf ca. 3,5 bar abgefallen und es ist ein Latex folgender Teilchengrößenverteilung entstanden:

| | | |
|---|---|---|
| D0 | 117,5 | DAN 170,5 |
| D10 | 144 | DAL 179,2 |
| D20 | 156 | DAF 190,2 |
| D30 | 165 | DAV 203,2 |
| D40 | 174 | DVN 179,8 |
| D50 | 183 | |
| D60 | 196 | |
| D70 | 233 | |
| D80 | 268 | DAV/DAN = 1,19 |
| D90 | 285 | |
| D100 | 326 | |

Der Gelgehalt dieses Latex liegt bei ca. 95 % und der Quellungsindex bei ca. 20. Der Latex ist als Pfropfgrundlage zur Herstellung von ABS-Polymerisaten ungeeignet, da die Zähigkeitswerte damit hergestellter ABS-Formteile nicht ausreichend sind.

In Abbildung 2 ist die Entwicklung der mittleren Latexteilchendurchmesser in Abhängigkeit von der Zeit nach quasikontinuierlichen Messungen dargestellt. Ausgehend vom gleichen Keimlatex entwickelt sich die Teilchengröße bei Verwendung des erfindungsgemäßen Emulgators anders als bei Verwendung von Dresinate.

Die Messungen erfolgten mit Hilfe der Laser-Korrelationsspektroskopie. Der mit Hilfe der Laserkorrelationsspektroskopie ermittelte Latexteilchendurchmesser ist etwa um den Faktor 1,2 größer als der mit Hife der Elektronenmikroskopie oder mit Hilfe der Ultrazentrifuge bestimmte Teilchendurchmesser.

Zum Verfahren der ON-LINE-Messung von Latexteilchen vgl. z.B. DE-OS 3 303 337.

Beispiel 57 (erfindungsgemäß)

Pfropfpolymerisation einer Styrol/Acrylnitril-Mischung auf den Polybutadienlatex aus Beispiel 53

50 Gew.-Teile Polybutadien (in Form eines Latex mit einem Feststoffgehalt von 25 Gew.-%, hergestellt durch Verdünnen des Polybutadienlatex aus Beispiel 53 mit entionisiertem Wasser) werden unter Stickstoff auf 63 °C erwärmt und mit 0,5 Gew.-Teilen $K_2S_2O_8$ (gelöst in 15 Gew.-Teilen Wasser) versetzt. Danach werden ein Gemisch aus 36 Gew.-Teilen Styrol und 14 Gew.-Teilen Acrylnitril sowie 1,5 Gew.-Teile des Natriumsalzes der disproportionierten Abietinsäure (gelöst in 25 Gew.-Teilen Wasser) innerhalb 4 Stunden zudosiert, wobei die Pfropfreaktion stattfindet. Nach einer Nachreaktionszeit wird der Latex in einer Magnesiumsulfat/Essigsäure-Lösung koaguliert und das resultierende Pulver bei 70 °C im Vakuum getrocknet.

Beispiel 58 (erfindungsgemäß)

Ausprüfung einer Abmischung des in Beispiel 57 beschriebenen Pfropfpolymerisats mit einem Styrol/Acrylnitril-Copolymerisat und einem $\alpha$-Methylstyrol/Acrylnitril-Copolymerisat.

Das in Beispiel 57 beschriebene Pfropfpolymerisat wurde mit einem Styrol/Acrylnitril-Copolymerisat (72:28, $M_w$ ca. 115 000, $M_w/M_n-1 \leq 2$), bzw. einem $\alpha$-Methylstyrol/Acrylnitril-Copolymerisat (72:28, $M_w$ ca. 75 000, $M_w/M_n-1 \leq 2$) in den in Tabelle IX angegebenen Gewichtsverhältnissen in einem Innenkneter abgemischt; als Additive wurden 2 Gew.-Teile Pentaerythrittetrastearat und 0,1 Gew.-Teile eines Silikonöls (jeweils bezogen auf 100 Gew.-Teile Pfropfpolymerisat + Copolymerisat) eingesetzt. Nach Verarbeitung durch Spritzguß wurden Kerbschlagzähigkeit (DIN 53 453), Härte (DIN 53 456), Wärmeformbeständigkeit Vicat B (DIN 53 460) und MVI (DIN 53 735u) sowie Rohton (nach Verarbeitung bei 240 °C bis 280 °C) und Oberflächenglanz (gemäß DE-AS 2 420 358) ermittelt. Die Ergebnisse sind ebenfalls in Tabelle IX aufgeführt.

**Tabelle IX:** Ausprüfung des in Beispiel 57 beschriebenen Pfropfkautschuks

| Pfropfpolymerisat aus Beispiel 57 [Gew.-Teile] | Styrol/ Acrylnitril-Copolymer [Gew.-Teile] | α-Methylstyrol/ Acrylnitril-Copolymer [Gew.-Teile] | RT $a_k$ [kJ/m²] | -40° C $a_k$ [kJ/m²] | Hc [N/mm²] | Vicat B [° C] | MVI [cm³/10min] | Glanz | Rohton 240° C | Rohton 260° C | Rohton 280° C |
|---|---|---|---|---|---|---|---|---|---|---|---|
| 30 | 70 | - | 15,3 | 9,4 | 103 | 102 | 8,0 | F-G | - | - | - |
| 40 | 60 | - | 16,8 | 12,3 | 84 | 100 | 5,9 | F | hell | hell | hell |
| 50 | 50 | - | 17,2 | 14,6 | 67 | 96 | 4,1 | F | - | - | - |
| 20 | - | 80 | 10,4 | 5,5 | 113 | 115 | 2,0 | F | - | - | - |
| 30 | - | 70 | 13,9 | 7,6 | 93 | 113 | 1,6 | F | - | - | - |
| 40 | - | 60 | 16,7 | 10,3 | 77 | 109 | 1,2 | E-F | hell | hell | gelblich |

Beispiel 59 (erfindungsgemäß)

Pfropfpolymerisation einer Styrol/Acrylnitril-Mischung auf den Polybutadienlatex aus Beispiel 53

Der in Beispiel 57 beschriebene Versuch wurde wiederholt, wobei anstatt des Natriumsalzes der disproportionierten Abietinsäure als Emulgator bei der Pfropfreaktion 1,5 Gew.-Teile der Verbindung 1 aus Tabelle I in Form des Di-Kalium-Salzes eingesetzt wurden.

Beispiel 60 (erfindungsgemäß)

Ausprüfung einer Abmischung des in Beispiel 59 beschriebenen Pfropfpolymerisats mit einem Styrol/Acrylnitril-Copolymerisat und einem $\alpha$-Methylstyrol/Acrylnitril-Copolymerisat.

Eingesetzt wurden die in Beispiel 58 beschriebenen Harzkomponenten, die Ergebnisse sind in Tabelle X zusammengestellt.

**Tabelle X:** Ausprüfung des in Beispiel 59 beschriebenen Pfropfkautschuks

| Pfropfpolymerisat aus Beispiel 59 [Gew.-Teile] | Styrol/Acrylnitril-Copolymer [Gew.-Teile] | α-Methylstyrol/Acrylnitril-Copolymer [Gew.-Teile] | RT $a_k$ [kJ/m²] | -40°C $a_k$ [kJ/m²] | Hc [N/mm²] | Vicat B [°C] | MVI [cm³/10min] | Glanz | Rohton 240°C | Rohton 260°C | Rohton 280°C |
|---|---|---|---|---|---|---|---|---|---|---|---|
| 30 | 70 | - | 16,1 | 9,3 | 103 | 103 | 8,2 | F-G | - | - | - |
| 40 | 60 | - | 17,1 | 13,0 | 85 | 101 | 5,8 | F | sehr hell | sehr hell | - hell |
| 50 | 50 | - | 17,6 | 14,0 | 67 | 95 | 4,0 | F | - | - | - |
| 20 | - | 80 | 10,5 | 6,3 | 114 | 115 | 2,2 | F | - | - | - |
| 30 | - | 70 | 13,5 | 8,1 | 95 | 113 | 1,7 | F | - | - | - |
| 40 | - | 60 | 16,9 | 10,0 | 76 | 108 | 1,2 | E-F | sehr hell | sehr hell | - hell |

Beispiel 61 (erfindungsgemäß)

Pfropfpolymerisation einer Styrol/Acrylnitril-Mischung auf den Polybutadienlatex aus Beispiel 56

50 Gew.-Teile Polybutadien (in Form eines Latex mit einem Feststoffgehalt von 25 Gew.-%, hergestellt durch Verdünnen des Polybutadienlatex aus Beispiel 56 mit entionisiertem Wasser) werden unter Stickstoff auf 63°C erwärmt und mit 0,5 Gew.-Teilen $K_2S_2O_8$ (gelöst in 15 Gew.-Teilen Wasser) versetzt. Danach werden ein Gemisch aus 36 Gew.-Teilen Styrol und 14 Gew.-Teilen Acrylnitril sowie 2 Gew.-Teile der Verbindung 1 aus Tabelle I in Form des Di-Kalium-Salzes (gelöst in 25 Gew.-Teilen Wasser) innerhalb 4 Stunden zudosiert, wobei die Pfropfreaktion stattfindet. Nach einer Nachreaktionszeit wird der Latex in einer Magnesiumsulfat/Essigsäure-Lösung koaguliert und das resultierende Pulver bei 70°C im Vakuum getrocknet.

Beispiel 62 (erfindungsgemäß)

Ausprüfung einer Abmischung des in Beispiel 61 beschriebenen Pfropfpolymerisats mit einem Styrol/Acrylnitril-Copolymerisat und einem $\alpha$-Methylstyrol/Acrylnitril-Copolymerisat.

Eingesetzt wurden die in Beispiel 58 beschriebenen Komponenten in den in Tabelle XI angegebenen Mengen, die Rohtöne bei Verarbeitung bei 240°C bis 280°C sind ebenfalls in Tabelle XI angegeben.

**Tabelle XI:** Ausprüfung des in Beispiel 61 beschriebenen Pfropfkautschuks

| Pfropfpolymerisat aus Beispiel 61 [Gew.-Teile] | Styrol/Acrylnitril-Copolymer [Gew.-Teile] | α-Methylstyrol/Acrylnitril-Copolymer [Gew.-Teile] | Rohton 240°C | Rohton 260°C | Rohton 280°C |
|---|---|---|---|---|---|
| 40 | 60 | - | hell | hell | hell |
| 30 | - | 70 | hell | hell | gelb-lich |

Beispiel 63 (nicht erfindungsgemäß)

Pfropfpolymerisation einer Styrol/Acrylnitril-Mischung auf den Polybutadienlatex aus Beispiel 56

Der in Beispiel 61 beschriebene Versuch wurde wiederholt, wobei anstatt des Di-Kalium-Salzes der Verbindung 1 aus Tabelle I als Emulgator bei der Pfropfreaktion 2 Gew.-Teile des Natriumsalzes der disproportionierten Abietinsäure eingesetzt wurden.

Beispiel 64 (nicht erfindungsgemäß)

Ausprüfung einer Abmischung des in Beispiel 63 beschriebenen Pfropfpolymerisats mit einem Styrol/Acrylnitril-Copolymerisat und einem α-Methylstyrol/Acrylnitril-Copolymerisat.

Eingesetzt wurden die in Beispiel 58 beschriebenen Komponenten in den in Tabelle XII angegebenen Mengen, die bei Verarbeitungstemperaturen von 240 °C bis 280 °C resultierenden Rohtöne sind ebenfalls in Tabelle XII angegeben.

**Tabelle XII:** **Ausprüfung des in Beispiel 63 beschriebenen Pfropfkautschuks**

| Pfropfpolymerisat aus Beispiel 63 [Gew.-Teile] | Styrol/Acrylnitril-Copolymer [Gew.-Teile] | α-Methylstyrol/Acrylnitril-Copolymer [Gew.-Teile] | Rohton 240° C | 260° C | 280° C |
|---|---|---|---|---|---|
| 40 | 60 | - | hell | hell | gelblich |
| 30 | - | 70 | hell | gelblich | gelb |

## Patentansprüche

1. Reaktionsprodukte aus 1 Mol eines cycloaliphatischen Diols der Formel I

   HO - R - OH    I

   mit 2 Mol cycloaliphatischen Carbonsäureanhydriden der Formel II und/oder III

   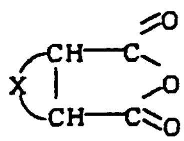

   II

   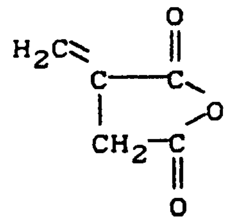

   III

   wobei
   R  cycloaliphatischer Kohlenwasserstoff-Rest mit 6 bis 20 C-Atomen, an den die Hydroxygruppen direkt oder über Methylengruppen gebunden sind
   und
   X =

   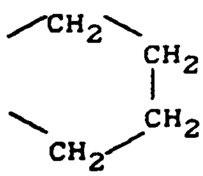 , 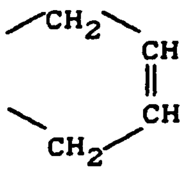 , 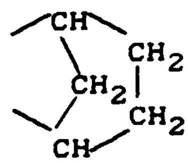 ,

   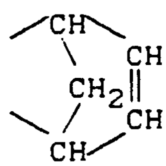 ,

   chemische Bindung —
   bedeuten, erhältlich durch Zusammenschmelzen des cycloaliphatischen Diols mit dem cycloaliphatischen Carbonsäureanhydrid bei Temperaturen von 100 °C bis 250 °C unter Inertgas, sowie die Alkali- und Ammoniumsalze dieser Reaktionsprodukte.

2. Verfahren zur Herstellung der Reaktionsprodukte gemäß Anspruch 1, dadurch gekennzeichnet, daß man cycloaliphatische Diole der Formel I und ein oder mehrere cycloaliphatische Carbonsäureanhydride der Formel II und/oder III unter Inertgasatmosphäre bei einer Temperatur von 100 bis 250 °C zusammenschmilzt.

3. Verwendung der Reaktionsprodukte gemäß Anspruch 1 in Form ihrer Alkali- oder Ammoniumsalze als Emulgatoren zur Emulsionspolymerisation.

4. Kautschuklatices, dadurch gekennzeichnet, daß zu ihrer Herstellung Reaktionsprodukte gemäß Anspruch 1 als Emulgatoren eingesetzt wurden.

5. Pfropfkautschuklatices erhalten durch Polymerisation von Mischungen aus Styrol und Acrylnitril in Gegenwart von Polybutadien, dadurch gekennzeichnet, daß zu ihrer Herstellung Reaktionsprodukte gemäß Anspruch 1 als Emulgatoren eingesetzt wurden.

6. ABS-Formmassen bestehend aus 10 bis 80 Gew.-% eines Pfropfkautschuks von Styrol und Acrylnitril auf einen teilchenförmigen Kautschuk und
90 bis 20 Gew.-% eines thermoplastischen Harzes aus 5 bis 40 Gew.-Teilen Acrylnitril und 95 bis 60 Gew.-Teilen Styrol, α-Methylstyrol, p-Methylstyrol, Methylmethacrylat oder Mischungen daraus,
dadurch gekennzeichnet, daß zur Herstellung des Pfropfkautschuks Reaktionsprodukte gemäß Anspruch 1 eingesetzt wurden.

## Claims

1. Reaction products of 1 mole of a cycloaliphatic diol corresponding to formula I

HO - R - OH    I

with 2 moles of cycloaliphatic carboxylic anhydrides corresponding to formulae II and/or III

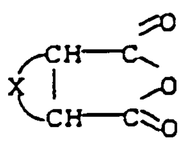

II

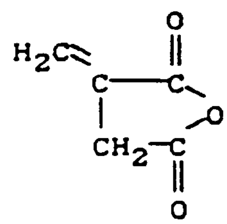

III

in which
R is a cycloaliphatic radical or a $C_{6-20}$ cycloaliphatic hydrocarbon radical to which the hydroxy groups are attached directly or through methylene groups
and
X =

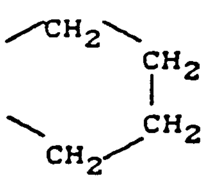 , 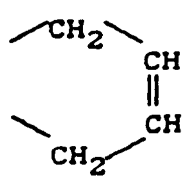 , 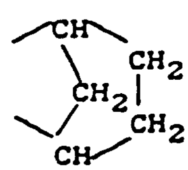 ,

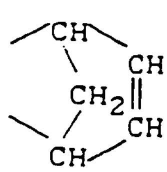 ,

chemical bond
obtainable by fusion of the cycloaliphatic diol with the cycloaliphatic carboxylic anhydride in an inert gas atmosphere at temperatures in the range from 100°C to 250°C, and the alkali and ammonium

salts of these reaction products.

**2.** A process for the production of the reaction products claimed in claim 1, characterized in that cycloaliphatic diols corresponding to formula I and one or more cycloaliphatic carboxylic anhydrides corresponding to formulae II and/or III are fused in an inert gas atmosphere at a temperature of 100 to 250 °C.

**3.** The use of the reaction products claimed in claim 1, in the form of their alkali metal or ammonium salts as emulsifiers for emulsion polymerization.

**4.** Rubber latices, characterized in that the reaction products claimed in claim 1 are used as emulsifiers for their production.

**5.** Graft rubber latices obtained by polymerization of mixtures of styrene and acrylonitrile in the presence of polybutadiene, characterized in that the reaction products claimed in claim 1 are used as emulsifiers for their production.

**6.** ABS molding compounds consisting of 10 to 80% by weight of a graft rubber of styrene and acrylonitrile on a particulate rubber and

90 to 20% weight of a thermoplastic resin of 5 to 40 parts by weight ofmacrylonitrile and 95 to 60 parts by weight ofmstyrene, α-methyl styrene, p-methyl styrene, methyl methacrylate or mixtures thereof,

characterized in that the reaction products claimed in claim 1 are used for the production of the graft rubber.

## Revendications

**1.** Produits de la réaction d'1 mol d'un diol cycloaliphatique de formule I :

HO - R - OH     I

avec 2 mol d'anhydride d'acide carboxylique cycloaliphatique de formule II et/ou III :

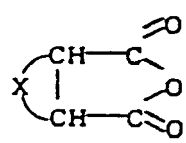

II

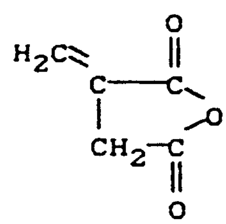

III

formules dans lesquelles :

R représente un reste d'hydrocarbure cycloaliphatique comportant 6 à 20 atomes de carbone, sur lequel les groupes hydroxyles sont fixés directement ou par l'intermédiaire du groupe méthylène,

et

X représente :

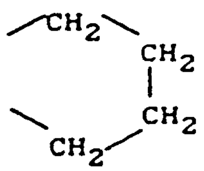 , 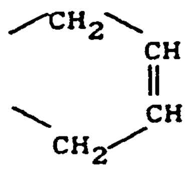 , 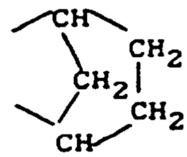 ,

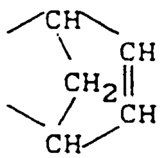 ,

une liaison chimique

produit que l'on peut obtenir par fusion ensemble du diol cycloaliphatique avec l'anhydride d'acide carboxylique cycloaliphatique à des températures de 100 °C à 280 °C sous gaz inerte, ainsi que les sels alcalins et les sels d'ammonium de ces produits de réaction.

2. Procédé de préparation des produits de réaction selon la revendication 1, caractérisé en ce qu'on fait fondre ensemble des diols cycloaliphatiques de formule I et un ou plusieurs anhydride(s) d'acide(s) cycloaliphatique(s) carboxylique(s) de formule II et/ou de formule III, en atmosphère de gaz inerte, à une température de 250 °C.

3. Utilisation des produits de réaction selon la revendication 1, sous forme de leurs sels alcalins ou d'ammonium, avec des émulsifiants pour une polymérisation par émulsion.

4. Latex de caoutchouc caractérisés en ce que l'on a utilisé comme émulsifiants pour leur préparation des produits de réaction selon la revendication 1.

5. Latex de caoutchouc greffés que l'on obtient par polymérisation de mélanges de styrène et d'acrylonitrile en présence de polybutadiène, latex caractérisés en ce que, pour leur production, on utilise comme émulsifiants des produits de réaction selon la revendication 1.

6. Compositions d'ABS à mouler, consistant en 10 % à 80 % en poids d'un caoutchouc de greffage de styrène et d'acrylonitrile sur un catouchouc sous forme de particules, et

en 90 à 20 % en poids d'une résine thermoplastique formée de 5 à 40 parties en poids d'acrylonitrile et de 95 à 60 parties en poids de styrène, d'α-méthylstyrène, de p-méthylstyrène, de méthacrylate de méthyle ou de leurs mélanges,

compositions caractérisées en ce qu'on a utilisé, pour la production du caoutchouc greffé, des produits de réaction selon la revendication 1.

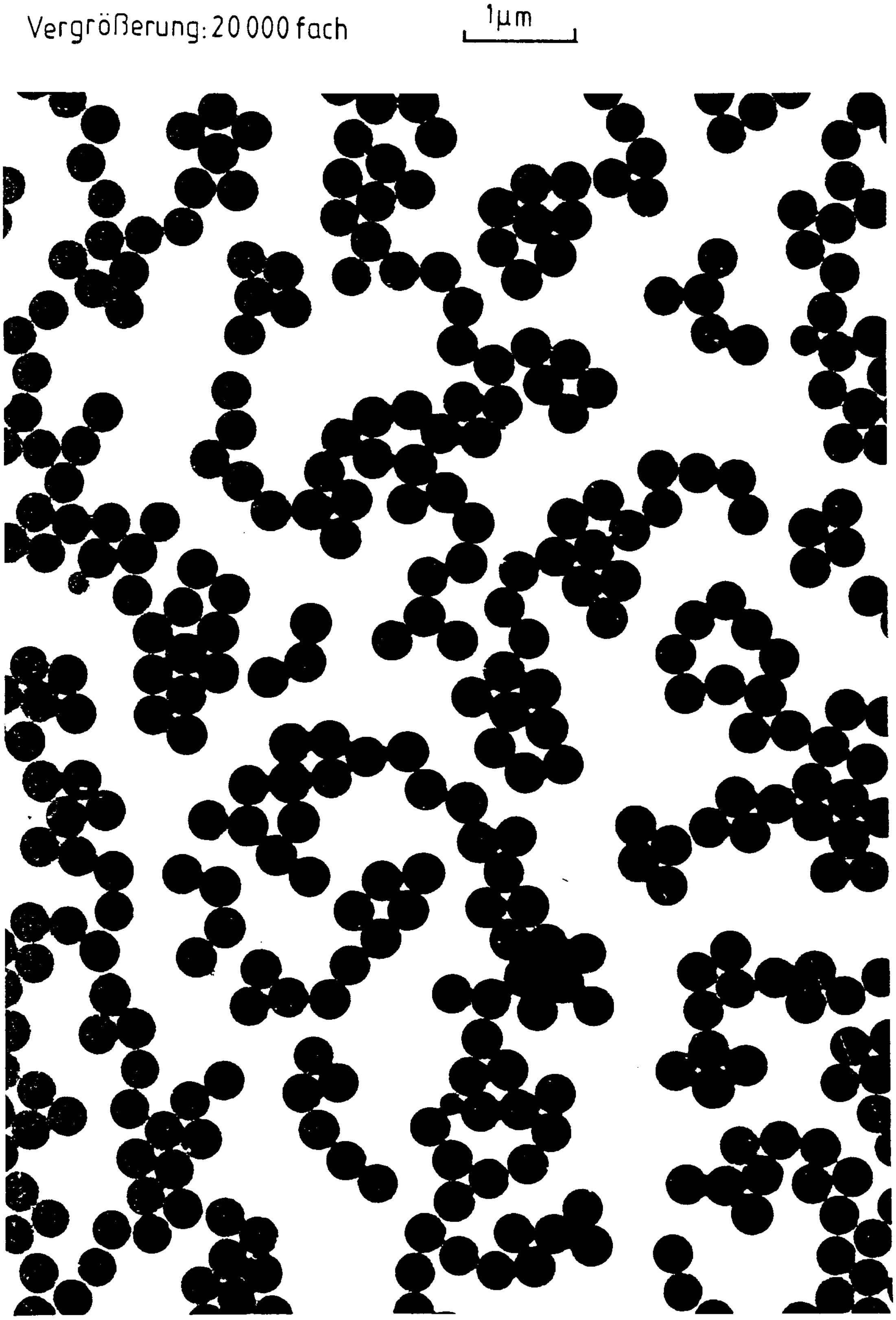


FIG.1

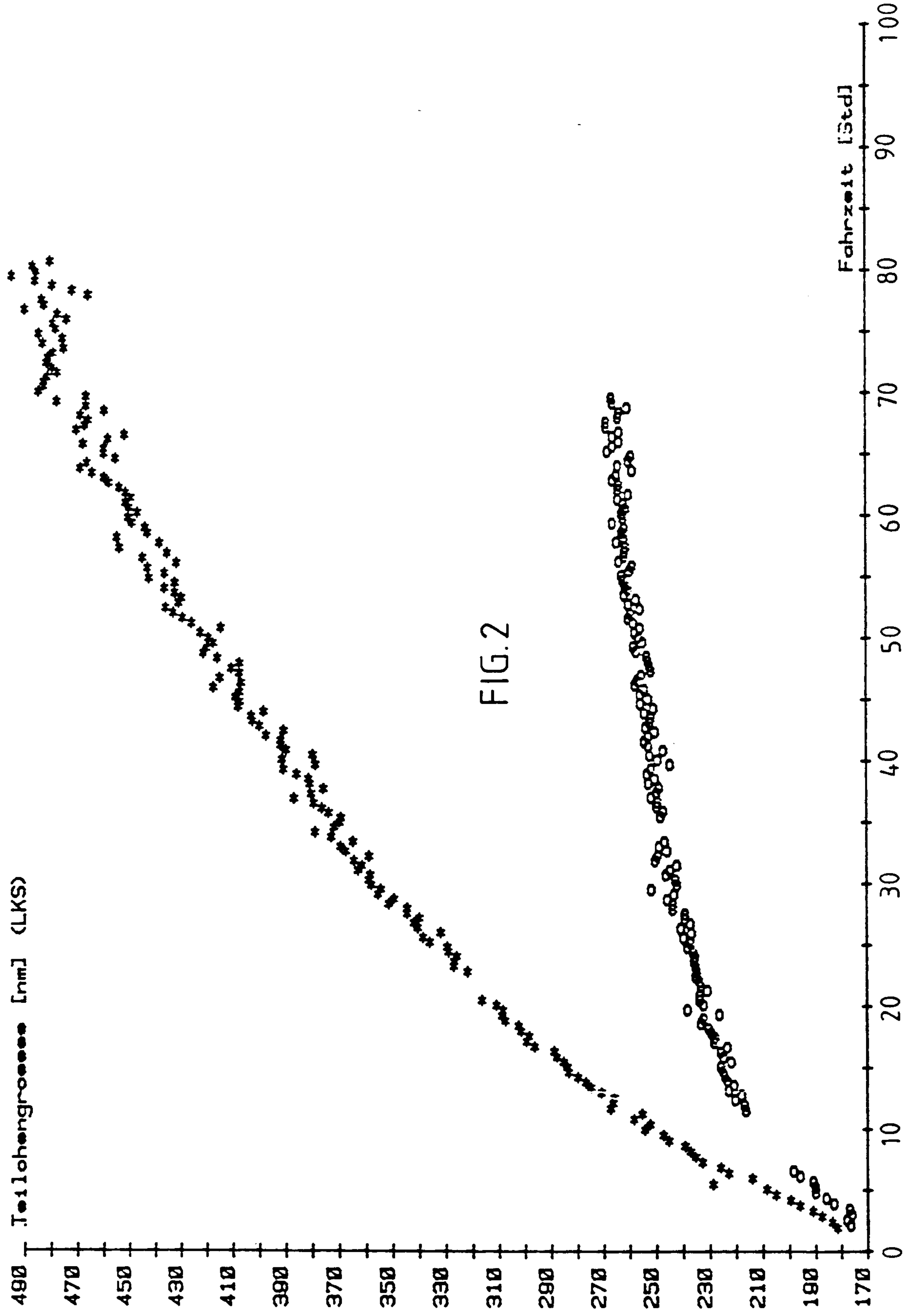
Teilchengroesse [nm] (LKS)
Fahrzeit [Std]
490 470 450 430 410 390 370 350 330 310 290 270 250 230 210 190 170
0 10 20 30 40 50 60 70 80 90 100

FIG. 2